(19) Europäisches Patentamt
European Patent Office
Office européen des brevets

(11) **EP 3 987 327 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **20733919.3**

(22) Anmeldetag: **15.06.2020**

(51) Internationale Patentklassifikation (IPC):
**G02B 5/28** (2006.01)      **G01J 3/26** (2006.01)
**G01J 3/02** (2006.01)      **G01S 7/481** (2006.01)
**G01S 17/48** (2006.01)

(52) Gemeinsame Patentklassifikation (CPC):
**G02B 5/28; G01S 7/4816; G01S 17/48; G02B 5/284;** G02B 5/285

(86) Internationale Anmeldenummer:
**PCT/EP2020/066480**

(87) Internationale Veröffentlichungsnummer:
**WO 2020/254244 (24.12.2020 Gazette 2020/52)**

(54) **OPTISCHES SYSTEM MIT EINEM FILTERELEMENT**

OPTICAL SYSTEM WITH A FILTER ELEMENT

SYSTÈME OPTIQUE POURVU D'UN ÉLÉMENT DE FILTRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **18.06.2019   DE 102019116514**
                  **17.02.2020   DE 102020104036**

(43) Veröffentlichungstag der Anmeldung:
**27.04.2022   Patentblatt 2022/17**

(73) Patentinhaber: **Carl Zeiss Jena GmbH**
**07745 Jena (DE)**

(72) Erfinder:
• **BUBLITZ, Daniel**
  **07745 Jena (DE)**
• **HILLENBRAND, Matthias**
  **73447 Oberkochen (DE)**
• **BURKHARDT, Matthias**
  **07745 Jena (DE)**

(74) Vertreter: **Patentanwälte Geyer, Fehners & Partner mbB**
**Perhamerstrasse 31**
**80687 München (DE)**

(56) Entgegenhaltungen:
**WO-A2-2008/140787     US-A- 4 184 749**

• **PRADYUMNA K. SWAIN ET AL: "Curved CCDs and their application with astronomical telescopes and stereo panoramic cameras", ADVANCES IN RESIST TECHNOLOGY AND PROCESSING XVI, vol. 5301, 7 June 2004 (2004-06-07), US, pages 109, XP055637780, ISSN: 0277-786X, ISBN: 978-1-5106-3857-0, DOI: 10.1117/12.535724**

**Beschreibung**

Die vorliegende Erfindung betrifft ein optisches System mit den Merkmalen des Oberbegriffs des Anspruches 1. Das optische System weist ein Filterelement auf, das insbesondere als schmalbandiger spektraler Filter für Kamerasysteme mit großem Lichtleitwert geeignet ist.

Solche Kamerasysteme können z.B. eingesetzt werden, um die Abstände von Objekten im Umfeld eines Fahrzeugs mit einer aktiven Beleuchtung zu messen.

Dabei kann die sogenannte Time-Of-Flight-Technik verwendet werden, wobei eine Lichtquelle in ihrer Helligkeit im Bereich von 10-40 MHz moduliert und das vom Objekt zurückgestreute Licht in der Phasenlage in Bezug auf die Modulationsphase ausgewertet wird. Das Verfahren kann sowohl punktscannend als auch mit einer ortsaufgelösten Kamera, bei der jeder einzelne Pixel eine solche Phasenauswertung realisiert, umgesetzt werden. Schwierig ist das Verfahren bei zu starken Umgebungslichtintensitäten zu verwenden. Gegenwärtig erreichen die entsprechenden Kamerasensoren mit einer elektronischen Gleichlichtunterdrückung und einem dichroitischen Detektionsfilter mit einer Bandbreite von ca. 50 nm eine effektive Reichweite von ca. 40 m. Für autonom fahrende Autos wäre aber eine Reichweite im Bereich von 100 bis 200 m notwendig. Ein weiterer Nachteil des Verfahrens ist die Störanfälligkeit durch Wechselwirkungen mit Systemen aus anderen Autos.

Ferner ist es bekannt, eine Entfernungsmessung mit Punktprojektion und Kamera (Triangulation) durchzuführen, wobei ein kollimierter Laserstrahl mit Hilfe eines Phasenelementes so umgewandelt wird, dass er ein unsymmetrisches 2D-Punktmuster mit ca. 100 x 100 Punkten in das zu detektierende Bildfeld ausstrahlt. Auf einem Kamerasensor, dessen Pupille einen gewissen Abstand zur Punkt-Beleuchtungspupille aufweist, können dann die absoluten Lagen der Punkte im Bild ausgewertet werden. Ist die Basislänge (Abstand zwischen Beleuchtungs- und Detektionspupille) bekannt, so kann damit für jeden Punkt die Entfernung am beleuchteten Objekt trianguliert werden. Das Verfahren hat den Vorteil, dass es technisch einfach zu realisieren ist. Außerdem muss nicht das gesamte Bildfeld aktiv beleuchtet werden, sondern die Beleuchtungsintensität wird nur auf die relativ wenigen Punkte aufgeteilt. Dadurch kann der gesamte Energieverbrauch signifikant reduziert werden. Die effektive Umgebungslichtunterdrückung und damit die effektive Reichweite ist aber eher geringer als bei der Time-Of-Flight-Technik, da die zeitliche Signalfilterung nicht so effektiv ist und die maximal mögliche Beleuchtungsintensitäten durch Lichtgrenzwerte begrenzt werden und damit für beide Verfahren sehr ähnlich sind. Das Verfahren wird bei Spielkonsolen und Handys zur Vermessung des Nahbereichs (einige m) schon serienmäßig eingesetzt. Um bei einem Einsatz im Auto Störung durch andere derartige Systeme im Verkehr zu verhindern, muss das System mit zwei Kameras ausgestattet werden. Es wird dann die relative Lage der Punkte in beiden Kamerabildern zueinander ausgewertet. Damit ist das Verfahren von den Koordinaten der Quellpupille unabhängig und es können auch Bildpunkte ausgewertet werden, die von anderen Autos oder Verkehrsteilnehmern projiziert werden.

Die zentrale Schwierigkeit besteht jedoch bei diesen Systemen darin, dass eine zu geringe Unterdrückung des Umgebungslichtes vorliegt. Es müsste eine bessere spektrale Filterung durchgeführt werden. Dies ist aber für die Detektion aufgrund des hohen Detektionslichtleitwertes nicht ohne weiteres möglich.

Will man beispielsweise eine 900 nm Quelle mit einer Bandbreite von 1 nm filtern, so muss bei senkrechtem Einfall der Einfallswinkel im Bereich von ± 2,7° liegen.

Versucht man eine Kamera mit einem Objektiv mit einem solchen Filter in der Pupillenebene nachzurüsten, so ist entweder das Bildfeld auf ca. 5° reduziert oder man erhält für typische Bildfelder von 40° eine Filterbreite von 50 nm, wie sie dem Stand der Technik entsprechen.

Bringt man den Filter eng an die Sensorebene, so entspricht der Winkelbereich einer maximalen Blendenzahl von 1/10,6. Typische Blendenzahlen, die für diese Anwendung angestrebt werden, liegen im Bereich typischer Handyobjektive von zirka 1/1,5 ... 1/2,4.

Aus diesen Gründen gibt es im System einer Kamera mit einer Blendenzahl von ca. 1/1,5 und einem Bildfeld von 40-100° keine Position, an der eine 1 nm breite spektrale Filterung realisiert werden kann.

Die US 4 184 749 A beschreibt ein optisches System mit den Merkmalen des Oberbegriffs des Anspruches 1. Die WO 2008/140787 A2 zeigt eine eine transmissive Filterschicht aufweisende Brille für eine 3D-Wahrnehmung eines Filmes.

Ausgehend hiervon ist es Aufgabe der Erfindung, ein optisches System bereitzustellen, mit dem eine sehr schmalbandige Filterung bei hohem Lichtleitwert realisiert werden kann.

Die Erfindung ist im Anspruch 1 definiert. Vorteilhafte Weiterbildungen sind in den abhängigen Ansprüchen angegeben.

Bei der Zahl n kann es sich insbesondere um eine Zahl handeln, die größer als 2, größer als 5, größer als 10, größer als 20, größer als 30 und bevorzugt kleiner als 1000 oder kleiner als 100 ist.

Das reflektive Filterelement kann einteilig oder mehrteilig ausgebildet sein. Wenn das reflektive Filterelement mehrteilig ausgebildet ist, können die mehreren Teile in einem optischen Arm oder z.B. in zwei optischen Armen angeordnet sein. Wenn sie in zwei optischen Armen angeordnet sind, sind bevorzugt in jedem optischen Arm mindestens ein reflektives Teilelement des Filterelementes angeordnet. Die Erzeugung von zwei Armen kann mittels Polarisationsteilung und/oder Intensitätsteilung realisiert werden. Dazu kann z.B. eine entsprechende Teilerplatte oder ein entsprechender Teilerwürfel vorgesehen sein.

Wenn das reflektive Filterelement mehrere Teile aufweist, können die einzelnen Teile durch einen Luftspalt voneinander beabstandet sein. Ferner kann das reflektive Filterelement einen Stufenspiegel umfassen.

Das reflektive Filterelement kann eine plane reflektive Seite oder Fläche aufweisen. Ferner ist es möglich, dass das reflektive Filterelement eine gekrümmte reflektive Seite oder Fläche aufweist.

Die Abbildungsoptik kann so ausgebildet sein, dass auf dem reflektiven Filterelement eine Zwischenabbildung realisiert oder ein reelles Zwischenbild erzeugt ist. Das reelle Zwischenbild kann zwischen Eintrittspupille und Filterelement oder zwischen dem Filterelement und der Austrittspupille erzeugt sein. Bevorzugt ist das Zwischenbild näher am Filterelement als an der Eintritts- bzw. der Austrittspupille. Der Abstand zwischen dem Zwischenbild und dem Filterelement kann z.B. kleiner als 50%, 40%, 30%, 20%, 10% oder 5% des Abstandes zwischen dem Filterelement und der Eintrittspupille (wenn das Zwischenbild zwischen Eintrittspupille und Filterelement erzeugt ist) bzw. der Austrittspupille (wenn das Zwischenbild zwischen Filterelement und Austrittspupille erzeugt ist) sein.

Die Abbildungsoptik kann als abbildendes Element nur das Filterelement aufweisen. Eventuell vorgesehene Umlenkspiegel, die lediglich eine Umlenkung bewirken, da die Umlenkspiegel bevorzugt plan ausgebildet sind, können Teil der Abbildungsoptik sein. Da solche Umlenkspiegel keine abbildende Wirkung haben, wird eine solche Abbildungsoptik hier immer noch als eine Abbildungsoptik verstanden, die (mit Ausnahme von eventuell vorgesehenen Umlenkspiegeln) nur das Filterelement aufweist.

Alternativ ist es möglich, dass die Abbildungsoptik mindestens ein weiteres abbildendes Element (wie z.B. eine Linse, einen gekrümmten Spiegel, ein abbildendes Gitter) aufweist.

Das optische System kann so ausgebildet sein, dass sich die Eintritt- und Austrittspupille teilweise oder vollständig überlappen. Eine vollständige Überlappung kann beispielsweise mittels einer Intensitäts- oder einer Polarisationsteilung realisiert sein. Dazu kann beispielsweise eine entsprechende Teilerplatte oder ein entsprechender Teilerwürfel vorgesehen sein.

Das optische System kann so ausgebildet sein, dass das reflektive Filterelement als Retroreflektor ausbildet ist und somit das sich von der Eintrittspupille divergent ausbreitende Strahlenbündel in sich zurück reflektiert. Es ist jedoch auch möglich, dass ein gewisser Winkel zwischen dem auf das reflektive Filterelement einfallenden Strahlenbündel und dem von dem reflektiven Filterelement reflektierten Strahlenbündel vorliegt. Der Winkel ist bevorzugt kleiner als 20°, 15°, 10° oder 5°.

Die Abbildungsoptik kann so ausgebildet sein, dass sie eine Homogenisierung bewirkt. Insbesondere kann eine Homogenisierung im Feld und/oder in Apertur erzeugt werden.

Das erfindungsgemäße optische System kann beispielsweise als Kamera, Spektrometer oder schaltbare Lichtquelle ausgebildet sein. Dafür kann das erfindungsgemäße optische System weitere, dem Fachmann bekannte Elemente aufweisen, um die entsprechende Funktion einer Kamera, eines Spektrometers oder einer schaltbaren Lichtquelle zu realisieren.

Das erfindungsgemäße optische System kann so ausgebildet sein, dass z.B. eine Filterbreite von 1 nm und darunter für eine vorbestimmte Wellenlänge (z.B. aus dem VIS- oder NIR-Bereich) bei einem Bildfeld von beispielsweise mindestens 30°, 40° oder 50° oder bei einem Bildfeld aus dem Bereich von 30° - 120° vorliegt.

Wesentliche Prinzipien des erfindungsgemäßen optischen Systems mit einem Filterelement können auf wie folgt dargestellt werden.

Ein herkömmlicher spektraler Filter, der aus z.B. dielektrischen Schichten besteht, wird in seiner spektralen Auflösung im Wesentlichen erstens durch sein Schichtdesign und zweitens durch die Benutzung in einer optischen Anordnung mit einem bestimmten Winkelspektrum bestimmt. Beide Designelemente sind unabhängig und begrenzen die spektrale Auflösung, sodass ein Filter nur dann sehr schmalbandig ausgeführt werden kann, wenn er ein geeignetes Schichtdesign mit vielen hoch genau abgetragenen Schichten aufweist und andererseits geeignet im optischen System integriert ist.

In dieser Erfindung geht es insbesondere um eine neuartige Ausbildung des erfindungsgemäßen Filterelementes in Kombination der Integration in den optischen Aufbau eines optischen Systems, sodass ein spektrale Auflösungsgrenze (nachfolgend herkömmliche Auflösungsgrenze genannt) unterschritten werden kann, die bei einem herkömmlichen Filterelement mit herkömmlicher Anordnung in einem optischen System selbst mit einem perfekten Schichtdesign des herkömmlichen Filterlements nicht unterschritten werden kann.

Um diese herkömmliche Auflösungsgrenze abzuleiten, wird im Folgenden davon ausgegangen, dass ein axial strukturiertes Filterelement, das lateral nicht strukturiert ist, von einem Lichtstrahl unter einem Einfallswinkel von $\alpha$ durchstrahlt wird. Unter einem axial strukturierten Filterlement wird hier insbesondere ein Filterelement verstanden, dass in Richtung eines darauf senkrecht einfallenden Lichtstrahls (bei bestimmungsgemäßer Verwendung) strukturiert ist.

Es ist für die folgende Ableitung unerheblich, wie viele Schichten das herkömmliche Filterelement aufweist und wie die konkreten Abstände der Schichten sind. Durch die Symmetrie des Systems sieht das herkömmliche Filterelement nur die Projektion der Lichtwelle auf seinen Gittervektor. Es sieht also konkret nur die zusammengesetzte Größe $G = \lambda / \cos(\alpha)$. Damit ist so ein nur axial strukturiertes herkömmliche Filterelement prinzipiell nicht in der Lage zwischen einer Änderung des Kosinus des Einfallswinkels $\alpha$ und einer Änderung der Wellenlänge $\lambda$ zu unterscheiden. Daher ist das herkömmliche Filterelement unabhängig von der Qualität des Schichtdesigns nicht in der Lage, eine sehr schmalbandige Filterung für ein breites Einfallswinkelspektrum zu realisieren. Ein Einfallswinkelspektrum von beispielsweise $\pm 20°$ um einen mittleren Einfallswinkel von 0° erzeugt für einen senkrecht einfallenden Strahl beispielsweise eine vollständige Transmission für eine Designwellenlänge von 800nm (G(0°)=800nm) während für die Randstrahlen unter einem Winkel von 20°

$$G(0°) \cdot \cos(20°) = 752nm$$

die Lage der Transmission angibt. Damit kann eine nur zirka 50nm breite Filterung für dieses Winkelspektrum erreicht werden. Im Stand der Technik wird daher für schmalbandige Kanten- oder Bandpassfilter ein maximaler Einfallswinkel spezifiziert, der in der Applikation nicht überschritten werden darf.

Der Filter wird im Stand der Technik mit annähernd ebenen Schichten in der Eintrittspupille realisiert. Für kleine Winkel $\alpha$ von unter 20° kann die Kosinusfunktion in einer Reihe entwickelt werden

$$\cos(\alpha \to 0) = 1 - \frac{\alpha^2}{2} + \cdots$$

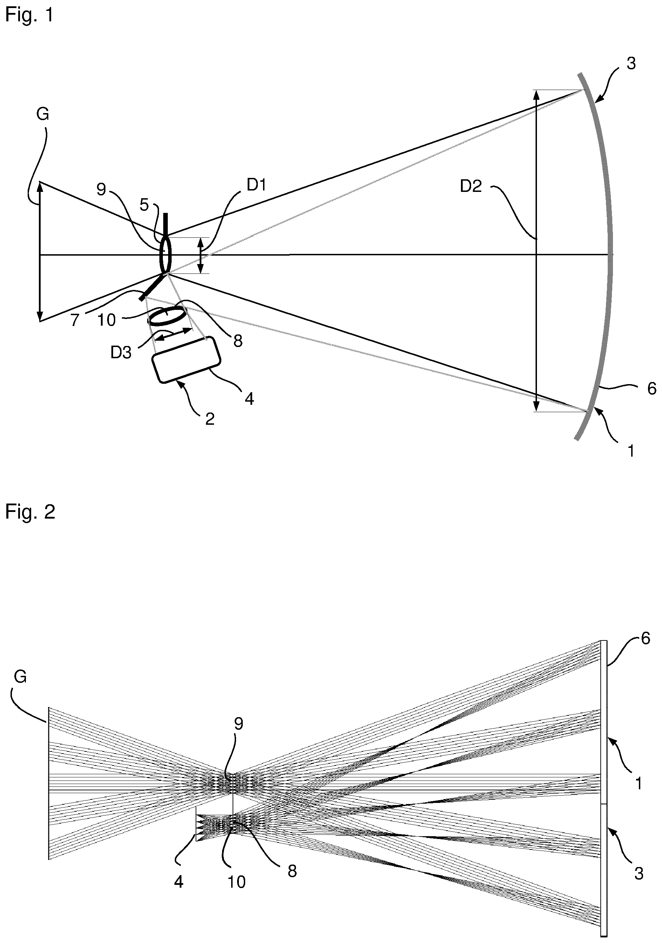

Erfindungsgemäß wird das Filterelement außerhalb der Eintrittspupille angeordnet und kann insbesondere sphärischen Filterschichten, deren Krümmungsmittelpunkt jeweils in der optisch definierten Eintrittspupille liegt, aufweisen. Das Filterelement kann dafür als retroreflektives Element hinter der Eintrittspupille (wie in Fig.1 und 2 ) ausgeführt werden. Durch diese Anordnung wird gewährleistet, dass alle Objekthauptstrahlen, die durch die Mitte der Einfallspupille laufen, exakt senkrecht auf die Filterschichten treffen. Die Objektstrahlen, die durch die Pupillenfeldränder laufen, fallen aber unter einem gewissen Winkel durch die Filterschichten und werden damit die Schmalbandigkeit des Filterelements begrenzen. Das Winkelspektrum $\Delta\alpha_{Filter}$ ist dann wegen der Erhaltung des Lichtleitwertes in der beabstandeten Filterebene genau den Faktor n kleiner als in der optischen Eintrittspupille. Da für kleine Winkel die Kosinusfunktion mit dem Quadrat des Winkels skaliert, kann damit in der neuen beabstandeten Filterlage eine um den Faktor $n^2$ schmalere Filterung als in der Nähe der optischen Eintrittspupille erreicht werden. Die dargestellte Abhängigkeit kann als Fernfeldnäherung verstanden werden, sodass sie ab einem n-Faktor von etwa 2 anwendbar ist. Es ist besonders bevorzugt Faktoren im Bereich von 2 bis 20 zu verwenden, weil damit spektrale Auflösungssteigerungen von 4...400fach erreicht werden können. Für extrem schmalbandige spektroskopische Anwendungen können die n-Werte aber auch 100 und darüber hinaus erreichen.

Bei dem erfindungsgemäßen optischen System kann das Filterelement gekrümmte Filterschichten aufweisen. Insbesondere können die Filterschichten sphärisch gekrümmt sein. Bevorzugt fallen die Krümmungsmittelpunkte der sphärisch gekrümmten Filterschichten zusammen. Besonders bevorzugt liegen die Krümmungsmittelpunkte der sphärisch gekrümmten Filterschichten näher an der Eintrittspupille als am Filterelement (z.B. kann der Abstand des jeweiligen Krümmungsmittelpunktes zur Eintrittspupille weniger als 50%, 40%, 30%, 20%, 10%, 5%, 4%, 3%, 2% oder 1% als der Abstand zwischen Filterschicht und Eintrittspupille betragen) und insbesondere liegen die Krümmungsmittelpunkte der sphärisch gekrümmten Filterschichten in der Eintrittspupille.

Die Filterschichten sind insbesondere in der Richtung von der Eintrittspupille zum Filterelement hin hintereinander angeordnet. Man kann daher auch sagen, dass das Filterelement in der Richtung von der Eintrittspupille zum Filterelement hin strukturiert ist oder dass das Filterelement ein axial strukturiertes Filterelement ist.

Bei den Filterschichten kann es sich z.B. um dielektrische Schichten, um Braggebenen eines Volumenhologramms und/oder um reflektierende Schichten mit transparenter Abstandsschicht handeln. Wenn es sich bei den Filterschichten um Braggebenen eines Volumenhologramms handelt, kann das Substrat für das Volumenhologramm nahezu jede geometrische Form aufweisen, da es für die optische Wirkung auf die Braggebenen des Volumenhologramms ankommt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:

Fig. 1 ein erstes Ausführungsbeispiel des erfindungsgemäßen optischen Systems;

Fig. 2 ein weiteres Ausführungsbeispiel des erfindungsgemäßen optischen Systems;

Fig. 3 ein weiteres Ausführungsbeispiel des erfindungsgemäßen optischen Systems;

Fig. 4 ein weiteres Ausführungsbeispiel des erfindungsgemäßen optischen Systems;

Fig. 5 ein weiteres Ausführungsbeispiel des erfindungsgemäßen optischen Systems;

Fig. 6 ein weiteres Ausführungsbeispiel des erfindungsgemäßen optischen Systems;

Fig. 7 ein weiteres Ausführungsbeispiel des erfindungsgemäßen optischen Systems;

Fig. 8 ein weiteres Ausführungsbeispiel des erfindungsgemäßen optischen Systems;

Fig. 9 eine Draufsicht der Anordnung von Eintrittsund Austrittspupille in Fig. 8;

Fig. 10 ein weiteres Ausführungsbeispiel des erfindungsgemäßen optischen Systems;

Fig. 11 ein weiteres Ausführungsbeispiel des erfindungsgemäßen optischen Systems;

Fig. 12 ein weiteres Ausführungsbeispiel des erfindungsgemäßen optischen Systems, und

Fig. 13 ein weiteres Ausführungsbeispiel des erfindungsgemäßen optischen Systems;

Bei dem in Fig. 1 gezeigten Ausführungsbeispiel umfasst das erfindungsgemäße optische System 1 eine Kamera 2.

Die Kamera 2 umfasst eine Kameraoptik 8 und einen Sensor 4 (bzw. einen Detektor 4), wobei die Kameraoptik 8 zusammen mit der Abbildungsoptik 3 des optischen Systems 1 den Gegenstand G auf den Sensor 4 abbildet.

Die Abbildungsoptik 3 umfasst eine erste Teiloptik 5, ein reflektives Filterelement 6 und einen Umlenkspiegel 7. Die zweite Teiloptik 8 kann auch Teil der Abbildungsoptik 3 sein.

Die erste Teiloptik 5 wirkt als Eintrittsblende oder Eintrittspupille 9 mit einem ersten Durchmesser D1. Die Strahlen eines Bildfeldes von 40° laufen durch die Eintrittspupille 9, wie schematisch in Fig. 1 dargestellt ist, und breiten sich dann von dieser divergent in Richtung zum Filterelement 6 aus. Das Filterelement 6 ist so angeordnet und ausgebildet, dass die Strahlen aus dem Bildfeld von 40° auf dem Filterelement 6 einen Bereich mit einem zweiten Durchmesser D2 ausleuchten, der dem n-fachen des ersten Durchmessers D1 entspricht. Bei dem hier angenommenen Bildfeld von 40° und einem Akzeptanzwinkel von ± 2° des Filterelementes 6 beträgt n zirka 10. Der zweite Durchmesser D2 ist somit 10 mal so groß wie der erste Durchmesser D1.

Das Filterelement 6 kann, wie in Fig. 1 angedeutet ist, gekrümmt ausgebildet sein. Insbesondere kann es beispielsweise sphärisch gekrümmt sein, wobei der Krümmungsradius dem Abstand zur ersten Teiloptik 5 entsprechen kann. Das Filterelement 6 kann aber auch eben ausgeführt werden oder eine beliebig gekrümmte Form aufweisen.

Das Filterelement 6 realisiert eine Pupillenabbildung der Eintrittspupille 9 auf die Austrittspupille 10 und gleichzeitig die schmale spektrale Filterung.

Da der Lichtleitwert (= Raumwinkel x Querschnitt) erhalten bleibt, ist in jedem Punkt der Oberfläche des Filterelementes 6 das lokale Winkelspektrum um den Faktor n im Vergleich zur Eintrittspupille 9 verringert. Somit kann mittels des Filterelementes 6 eine gewünschte schmale spektrale Filterung realisiert werden.

Der Umrechnungsfaktor zwischen spektraler Breite und zulässigem Winkelbereich (Akzeptanzwinkel) hängt vom Ablenkwinkel der Strahlen am Filterelement 6 ab (konkret vom Kosinus des halben Ablenkwinkels). Wenn der Ablenkwinkel 0° ist, wird ein einfallender Strahl in sich zurückreflektiert, so dass eine gewünschte Filterbreite von 1 nm für Strahlung von 900 nm einem Winkelbereich von ± 2,7° entspricht. Aufgrund der Reihenentwicklung der Cosinusfunktion wird die erzielbare spektrale Breite mit dem Quadrat des Beleuchtungsdurchmesser-Verhältnisses n kleiner.

Würde dagegen beispielsweise ein Einfallswinkel (Ablenkwinkel) von 20° realisiert werden, wäre das zulässige Winkelspektrum (= Akzeptanzwinkel) 20° ± 0.08° für eine 1 nm Filterung bei 900 nm Strahlung. Die Filterbandbreite sinkt in diesem Fall nur linear zum Beleuchtungsdurchmesserverhältnis n.

Aus diesem Grund ist der Aufbau gemäß Fig. 1 bevorzugt, da hier ein Ablenkwinkel von nahezu 0° realisiert ist.

Insbesondere kann ein dritter Durchmesser D3 der zweiten Teiloptik 8 dem ersten Durchmesser D1 entsprechen.

Gerade in diesem Bereich kann eine Optik realisiert sein, die die vom Filterelement 6 reflektierten Strahlen abbildet.

Der Umlenkspiegel 7 führt in vorteilhafter Weise dazu, dass eine unerwünschte Abschottung durch die zweite Teiloptik 8 verhindert werden kann. Natürlich ist es möglich, zwischen der ersten Teiloptik 5 und dem Filterelement 6 mindestens ein nicht dargestelltes Umlenkelement vorzusehen, um die Baubarkeit der Kamera 2 zu verbessern.

Das Filterelement 6 kann als dichroitischer Schichtstapel ausgebildet sein. In diesem Fall ist es bevorzugt, dass der Krümmungsradius des Filterelementes 6 dem Abstand zur Eintrittspupille 9 entspricht, so dass alle Strahlen annähernd senkrecht in die Filterstruktur einfallen.

Das Filterelement 6 kann auch aus zwei Reflexionsschichten/Schichtstapeln mit einer transparenten Abstandsschicht ausgebildet sein, ähnlich zu einem gewölbten Fabry-Perot-Filter.

Soll z.B. die angegebene 1 nm Filterung bei 900 nm durchgeführt werden, so müssen ungefähr 900 Teilwellen im Filter 6 interferieren, so dass die Filterdicke ca. 0,5 mm entspricht. Da solche dicke Filter 6 in der Herstellung aufwendig sind, kann bevorzugt eine transparente gleich dicke Abstandsschicht als Substrat zwischen zwei deutlich dünneren Schichtstapeln vorgesehen sein.

Besonders bevorzugt kann das reflektive Filterelement 6 als optisches Volumenhologramm ausgeführt sein. Der maximale Brechzahlsprung der Strukturen in diesem Gitter sollte so gewählt werden, dass eine effektive Ordnungszahl des Gitters im Bereich von 1000 erreicht wird. Werden solche Volumenhologrammmaterialien eingesetzt, kann das Filterelement 6 beliebig gekrümmt oder auch eben ausgeführt werden.

Die für Volumenhologramme verwendeten Polymermaterialien haben lineare Ausdehnungskoeffizienten im Bereich von $10^{-5}$/m. Wird das Filter 6 bei stark variierenden Umgebungstemperaturen verwendet, so kann sich die Filterwellenlänge deterministisch verschieben. In diesem Fall ist besonders bevorzugt eine Laserquelle zu verwenden, die man z.B. über eine Temperierung spektral an den Arbeitspunkt des Filterelementes 6 anpasst bzw. bei der Anwendung in der Spektroskopie die Messwerte entsprechend korrigiert.

Wird in der Eintrittspupille 9 oder vor und hinter der Eintrittspupille 9 ein zusätzliches optisch abbildendes Element angeordnet (wie z.B. eine Linse oder ein abbildender Spiegel), so kann ein reelles Zwischenbild auf das Filterelement 6 oder nahe am Filterelement 6 abgebildet werden. Unter nahe am Filterelement 6 wird insbesondere verstanden, dass der Abstand des abgebildeten reellen Zwischenbildes zum Filterelement 6 geringer ist als der zur Eintrittspupille 9. Es ist dann vorteilhaft, wenn die Wölbung des Filterelements 6 an die Bildfeldwölbung der ersten Teiloptik 5 und der zweiten Teiloptik 8 angepasst wird.

Das Filterelement 6 kann hinter seiner Filterschicht eine brechzahlangepasste Schicht aus stark absorbierendem Material aufweisen, um Transmissions- und Streulicht, das durch den Filter 6 tritt, zu absorbieren und damit vor der Detektion durch den Sensor 4 zu unterdrücken.

Die zweite Teiloptik 8 kann als Kameraobjektiv nach dem Stand der Technik ausgeführt sein. Insbesondere ist die zweite Teiloptik 8 derart optimiert, das sie zusammen mit der Abbildungsleistung des Filterelementes 6 und der optionalen ersten Teiloptik 5 ein möglichst scharfes und ebenes Bildfeld realisiert. Aufgrund des sehr schmalbandigen Längenwellenbereiches, der von dem Filterelement 6 reflektiert wird, eignen sich auch hybride oder diffraktive Optiken für die erste und/oder zweite Teiloptik 5, 8.

In Fig. 2 ist ein Ausführungsbeispiel ohne erste Teiloptik 5 in der Eintrittspupille 9 gezeigt. Die zweite Teiloptik 8 ist schematisch eingezeichnet.

Man erkennt, dass das erfindungsgemäße optische System 1 ein großes Bildfeld mit großer Blendenöffnung/Lichtstärke ermöglicht und trotzdem durch die Anordnung des Filterelementes 6 eine sehr schmalbandige Detektion und damit gute Umgebungslichtunterdrückung erreicht wird.

Nachteilig an der Ausführungsform gemäß Fig. 2 sind die Abbildungsfehler durch die abbildende Wirkung des Filterelementes 6, das eine Pupillenabbildung realisiert. Aus diesem Grund ist das Ausführungsbeispiel gemäß Fig. 2 ein sehr einfach zu realisierendes Design, das aber Grenzen in der Bildschärfe aufweisen kann.

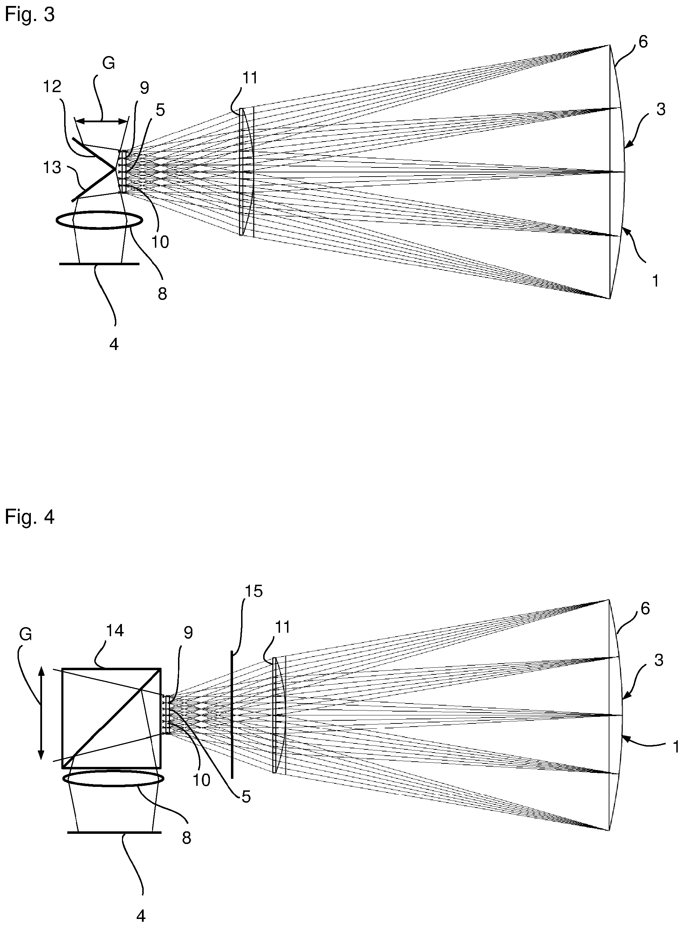

Eine Weiterbildung des Ausführungsbeispiels von Fig. 2 mit verbesserter Bildperformance ist in Fig. 3 dargestellt. Bei diesem Ausführungsbeispiel ist die erste Teiloptik 5 als Asphäre ausgebildet und ist zwischen der ersten Teiloptik 5 und dem Filterelement 6 noch eine dritte Teiloptik 11 (die ebenfalls Teil der Abbildungsoptik 3 ist) angeordnet, die dafür sorgt, dass ein Zwischenbild auf dem Filterelement 6 abgebildet wird. Die dritte Teiloptik 11 kann beispielsweise als Plan-Konvex-Linse 11 ausgebildet sein. Mit der dritten Teiloptik 11 können Abbildungsfehler, die das abbildende Filterelement 6 verursacht, verhindert werden. Bei dem in Fig. 3 gezeigten Ausführungsbeispiel ist die Plan-Konvex-Linse 11 symmetrisch im Hinweg zum Filterelement 6 und symmetrisch im Rückweg vom Filterelement 6 angeordnet. Damit wird eine vergleichsweise einfache optische Anordnung aus einer schwachen asphärischen Linse 5 in der Eintrittspupille 9 und einer zweiten Linse 11 (Plan-Konvex-Linse 11) realisiert, mit denen z.B. für Pupillengrößen im Bereich von 20 mm und Feldwinkel von 40° eine beugungsbegrenzte Performance realisiert werden kann. Da das abbildende Filterelement 6 in Retroreflexion verwendet wird, kann die Teilung zwischen Eintrittspupille 9 und Austrittspupille 10 über eine Pupillenteilung realisiert werden. Dazu sind zwei Umlenkspiegel 12 und 13 vorgesehen.

Alternativ kann man eine Polarisationsteilung durchführen, wie in Fig. 4 dargestellt ist. Mit dem Polarisationsteilerwürfel 14 und der nachgeordneten λ/4-Platte 15 wird die gewünschte Polarisationsteilung realisiert. Natürlich kann man auch eine Intensitätsteilung verwirklichen. In diesem Fall wird statt des Polarisationsteilerwürfels 14 ein entsprechender Strahlteilerwürfel vorgesehen. Die λ/4-Platte 15 kann dann entfallen.

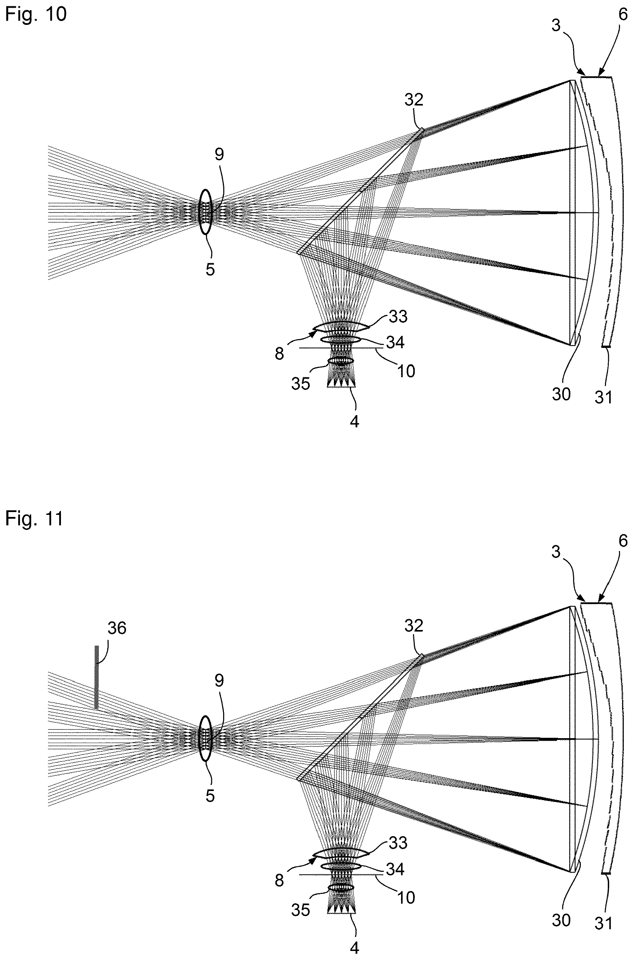

Wird eine Polarisationsteilung oder Intensitätsteilung durchgeführt, so ist es bevorzugt, die Austrittspupille 10 exakt auf die Eintrittspupille 9 abzubilden, um die Bildqualität zu optimieren. Die Teilung kann auch durch eine Teilerplatte anstelle eines Teilerwürfels realisiert werden. Um die Korrektur der Abbildungsoptik 3 zu verbessern, kann es sinnvoll sein, die Pupillenlage nicht zugänglich innerhalb der Abbildungsoptik 3 auszuführen. Speziell dafür ist eine Polarisations- oder Intensitätsteilung bevorzugt, da diese nicht nur in der Pupille erfolgen kann sondern auch auf der Strecke zwischen Eintrittspupille 9 und Filterelement 6 wie dies z.B. in den nachfolgend noch beschriebenen Ausführungsbeispielen gemäß Fig. 10 bis 13 der Fall ist.

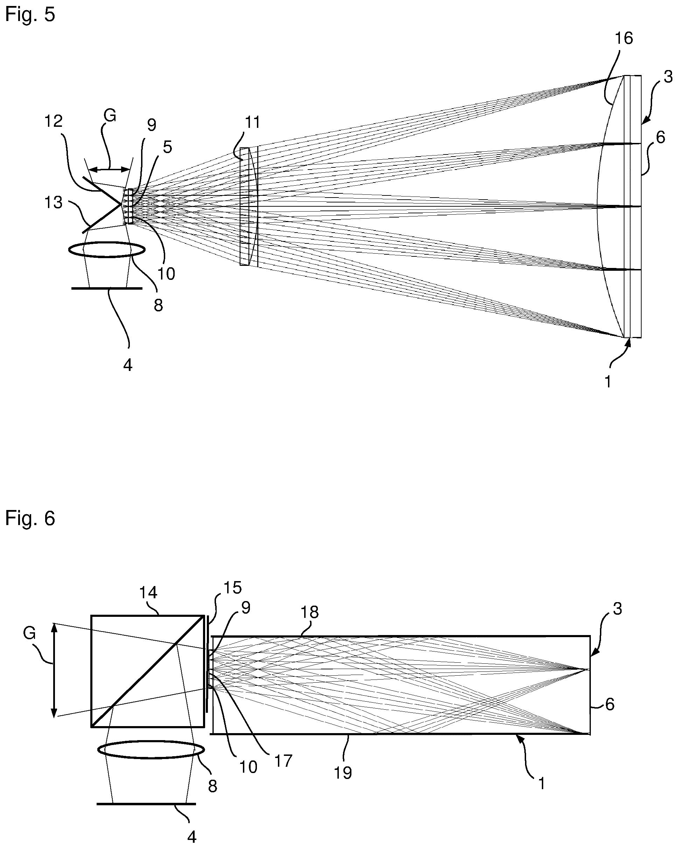

Aus technologischen Gründen kann es von Vorteil sein, das Filterelement 6 als ebenes Bauteil auszubilden. In diesem Fall kann z.B. eine gewünschte Feldebnung über eine zusätzliche Feldlinse 16 (die ebenfalls Teil der Abbildungsoptik 3 ist) realisiert werden, wie schematisch in Fig. 5 gezeigt ist. Das Ausführungsbeispiel gemäß Fig. 5 ist dabei eine Weiterbildung des Ausführungsbeispiels von Fig. 3.

Alternativ kann die asphärische Linse 5, die Plan-Konvex-Linse 11 und die Feldlinse 16 durch eine entsprechend ausgebildete diffraktiv optische Linse 17 ersetzt werden, die die gewünschte Feldebnung durchführt. Dies kann z.B. speziell dann von Vorteil sein, wenn der Aufbau in Anwendungen eingesetzt werden soll, die sehr bauraumkritisch sind. Dabei kann es sich z.B. um Smartphones handeln, deren Gesamtdicke beispielsweise nicht größer als 7 mm sein soll. In diesem Fall kann das Bildfeld auf dem Filterelement 6 durch zusätzliche Spiegelelemente 18, 19 eingefaltet sein, wie in Fig. 6 schematisch dargestellt ist. Dabei können für das Filterelement 6 mehrere Gitteranordnungen für verschiedene reflektierende Bildfeldanteile in einem Volumenhologramm ineinander belichtet sein. Anstatt der Pupillenteilung mit den beiden Umlenkspiegeln 12, 13 wird hier ein Polarisationsteilerwürfel 14 verwendet.

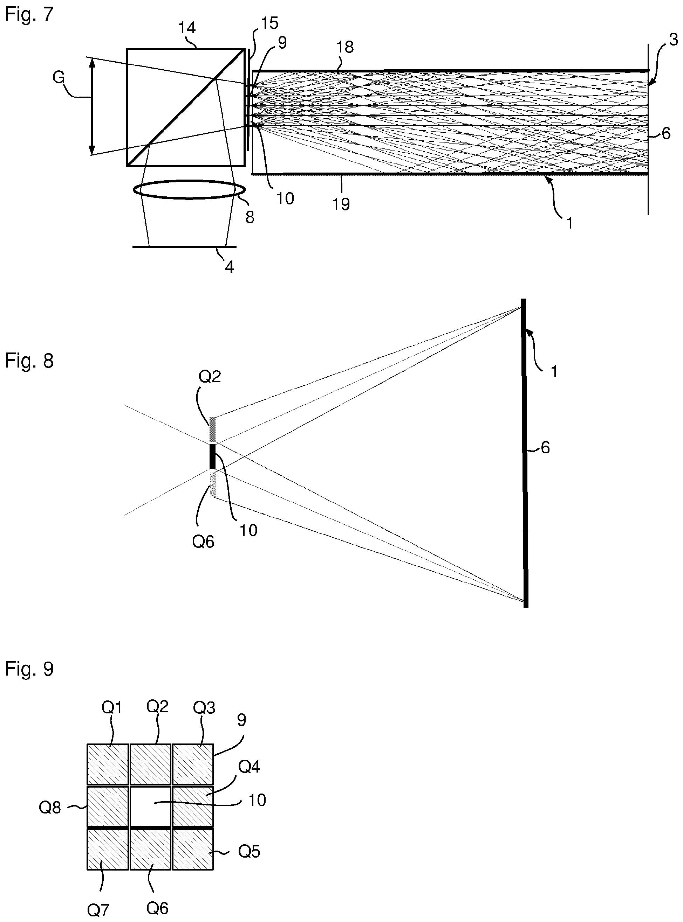

In Fig. 7 ist eine Abwandlung des optischen Systems 1 gemäß Fig. 6 gezeigt, bei dem die diffraktiv optische Linse 17 nicht mehr vorgesehen ist, wodurch kein Zwischenbild mehr auf dem Filterelement 6 erzeugt wird. Der durch die beiden Spiegelelemente 18, 19 gebildete Mischstab ist in gleicher Weise wie beim Ausführungsbeispiel gemäß Fig. 6 dezentriert angeordnet, wodurch die Symmetrie gebrochen wird und durch das Filterelement 6 bedingte Geisterbilder verhindert werden können.

Das erfindungsgemäße optische System 1 kann auch als schmalbandiger Quellenfilter realisiert sein, wie schematisch in Fig. 8 und 9 dargestellt ist. Dabei sind beispielhaft acht Quellen Q1-Q8 in einer die Austrittspupille 10 umgebenden Eintrittspupille 9 angeordnet. Das Licht dieser Quellen Q1-Q8 wird durch das reflektive Filterelement 6 gefiltert reflektiert und in die Austrittspupille 10 abgebildet. Die dargestellten Quellen Q1-Q8 können reelle Quellen, wie z.B. LEDs, sein oder auch Abbilder solcher Quellen.

Die in Fig. 8 und 9 dargestellte räumliche Anordnung von Eintritts- und Austrittspupille 9, 10 ist rein beispielhaft zu verstehen. Die Eintrittspupille 9 muss die Austrittspupille 10 nicht umgeben, sondern kann z.B.

neben der Austrittspupille 10 angeordnet sein. Wesentlich ist, dass in dieser Art und Weise eine sehr schmalbandige Beleuchtung mit Licht, das durch die Austrittspupille 10 tritt, möglich ist. So können z.B. die einzelnen Quellen Q1-Q8 nacheinander oder selektiv ein- und ausgeschaltet werden (also nicht nur schmalbandig spektral gefiltert sondern auch technisch einfach zusammengespiegelt werden).

Das erfindungsgemäße optische System 1 kann auch als Spektrometer ausgebildet sein. Wird z.B. ein optischer Aufbau gemäß Fig. 3 und als Filterelement 6 ein holographisches Volumengitter verwendet, so verlaufen die Braggebenen im Gitter auf sphärische Flächen senkrecht zu den einfallenden Hauptstrahlen. Soll das Filterelement für Wellenlängen im nahen Infrarot (z.B. 900 nm) funktionieren, so müssen die Braggebenen ca. 450 nm/$n_1$-Abstand haben ($n_1$ = der mittlere Brechungsindex des Materials für das holographische Volumengitter und beträgt ca. 1,52). Typische holographische Materialien, die z.B. von der Firma Akonia Holographics oder der Firma Covestro erhältlich sind, können aber nur im sichtbaren Spektralbereich geschrieben werden. Mit diesen Schreibwellenlängen von z.B. 500 nm ist es schwierig, sphärische Braggebenen mit 450 nm/$n_1$-Abstand zu schreiben.

Daher ist es bevorzugt, das holographische Volumengitter mit einem Hilfshologramm zu schreiben, das den Belichtungsaufbau deutlich vereinfacht und flexible lokale Schreibgeometrien ermöglicht.

Angewendet auf das hier zu schreibende reflektive Filterelement 6 mit den sphärisch gekrümmten Braggebenen können dann mit einer Schreibwellenlänge Gitter mit jeder längeren Nutzwellenlänge geschrieben werden. Da außerdem ein reelles Zwischenbild auf dem Filterelement 6 durch den optischen Aufbau gemäß Fig. 3 vorliegt, können für jeden Kamerapixel des Sensors 4 unterschiedliche Nutzwellenlängen geschrieben werden und damit z.B. ein 1D spektral aufgelöstes Kamerabild realisiert werden.

Es können auch flexiblere Strukturen geschrieben werden, wie sie für hyperspektrale Bildgebung verwendet werden. Dafür werden z.B. je 16 Kamerapixel des Sensors 4 mit unterschiedlichen Nutzwellenlängen zu einem Bildsensorelement mit 16 spektralen Banden zusammengeschaltet und so kann ein 2D aufgelöstes Kamerabild mit 16 spektralen Stützstellen ohne mechanische Strahlablenkungsvorrichtung realisiert werden.

Da das Hilfshologramm besonders bevorzugt auch als Volumenhologramm ausgeführt werden kann, können an jeder Stelle auch mehrere Volumengitter unterschiedlicher Braggebenendichte eingeschrieben werden, wodurch das reflektive Filterelemente 6 als Mehrbandenfilter realisiert werden kann.

Soll z.B. eine schmale spektrale Absorptionslinie in einem Kamerabild detektiert werden, so kann jeder zweite Pixel die Summe aus je 1 nm Bereich vor und nach der Absorptionsbande und der zweite Pixel einen 2 nm Bereich auf der Absorptionslinie detektieren.

Das Differenzsignal dieser beiden Pixel stellt dann eine um die Untergrundabsorption bereinigt Absorptionsstärke auf der Spektrallinie dar.

Werden z.B. für bestimmte Kamerazeilenbereiche Mehrbandenfilter nach Hadamard-Folgen geschrieben, so kann ein sehr lichtstarkes Hadamard-Spektrometer technisch einfach realisiert werden. Das heißt, dass zeitliche Multiplexen verschiedener Schaltzustände der Hadamard-Maske wird in einer Dimension durch das simultane Erfassung verschiedener zeilenweiser Kodierungen ersetzt. Alternativ kann in der Filterebene des Filterelements 6 ein Array aus schaltbaren Hologrammen eingesetzt werden, um eine dynamische Maske zu realisieren. Speziell in Kombination mit FLIR-Mikrobolometerarrays können so sehr günstige Spektrometer (low cost spectrometer) realisiert werden. Die deutlich geringere Sensitivität der Mikrobolometerarrays bei der Detektion von Licht zwischen 400 nm und 2000 nm im Vergleich zu Silizium- oder Indium-Gallium-Arsenidsensoren kann dann durch die signifikant höhere Lichtstärke der Hadamard-Spektroskopie kompensiert werden.

Die Materalien von Covestro eignen sich für alle Anwendungen in Spektralbereichen, in denen sie transparent sind, z.B. von 400 bis 2000 nm.

Darüber hinaus besteht in der Entwicklung indexmodulierbarer Gläser eine mögliche Alternative. Diese anorganischen Materialien versprechen eine höhere Temperaturstabilität und chemische sowie mechanische Stabilität. Die maximalen Brechzahlunterschiede, die in diesen Gläsern induziert werden können, sind gegenwärtig noch geringer als für die Polymermaterialien. Da aber für die hier beschriebene Anwendung deutlich geringere Brechzahlunterschiede ausreichen, sind solche schreibbaren Gläser eine Möglichkeit, um das reflektive Filterelement 6 zu realisieren.

Neben Hadamard-Spektrometern können auch FTIR-Spektrometer durch die dargestellte erfindungsgemäße Lehre realisiert werden. Betrachtet man das Volumengitter lokal, so wird die einfallende Lichtquelle an den Braggstrukturen zurückreflektiert. Jede Braggebene erzeugt eine rückreflektierte Feldstärkekomponente mit einer bestimmten Phasenlage. Der gesamte an einem Punkt des Filterelementes 6 zurückreflektierte Feldstärkevektor ergibt sich als Integral der rückgestreuten Feldstärkevektoren mit ihren relativen Phasenlagen über alle Tiefen des Filterelementes 6. Die spektrale Verteilung der zurückreflektierten Lichtanteile ergibt sich dann als Fourier-Transformation der Brechzahlverteilung über die verschiedenen Tiefen des Filterelementes 6. Ist die Brechzahl über die Tiefe sinusförmig moduliert, so wird genau eine Wellenlänge zurückreflektiert. Die Anzahl der Modulationsperioden bzw. die mathematische Fensterfunktion über die Gesamtdicke des Filterelementes 6 bestimmt dann die Frequenzbandbreite der zurückgestreuten Strahlung.

Eine zu den Hadamard-Folgen sehr ähnlicher Ansatz sind Fourier-Folgen, wie sie in der Spektroskopie technisch in Fourier-Transform-IR-Spektrometern umgesetzt werden. Entspricht die Tiefenfunktion des Filterelementes 6 zweier dünner teilreflektierender Flächen, die eine bestimmte Distanz zueinander haben, so ergibt es sich als Spektrum der rückreflektierten Wellen eine breitbandige Verteilung mit sinusförmig modulierter spektraler Intensität. Die Periode dieser Modulation ist proportional zum Abstand der beiden teilreflektierenden Flächen. Damit kann man durch einen nach Fig. 10 realisierten Aufbau eine FTIR-Spektroskopie ohne bewegte Teile realisieren.

Bei dem Ausführungsbeispiel gemäß Fig. 10 ist das Filterelement 6 als Doppelreflektor mit einem teilreflektiven gekrümmten Element 30 und einem davon beabstandeten Stufenspiegel 31 ausgebildet, wobei die Darstellung der Elemente 30 und 31 in Fig. 10 stark überhöht und nicht maßstabsgetreu ist, um den Stufenspiegel 31 darstellen zu können. Es ist eine Strahlteilerplatte 32 zur Intensitäts- oder Polarisationsteilung auf der Strecke zwischen der Eintrittspupille 9 und dem Filterelement 6 vorgesehen. Die zweite Teiloptik 8 weist hier drei Linsen 33, 34 und 35 auf und die Austrittspupille 10 liegt bei dem in Fig. 10 gezeigten Ausführungsbeispiel zwischen den Linsen 34 und 35.

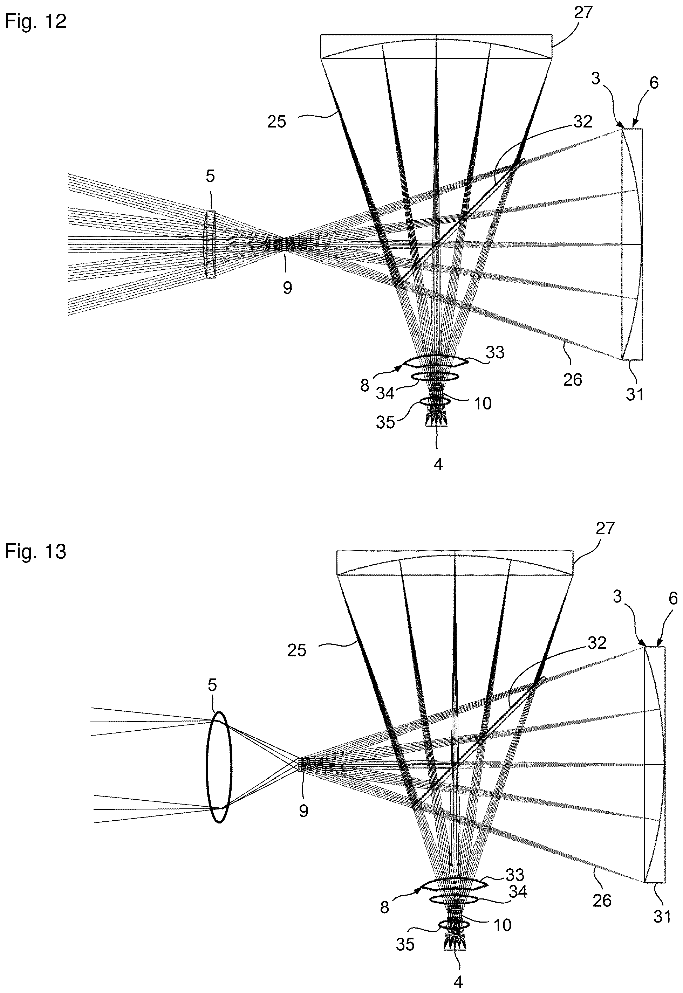

Bei dem in Fig. 10 gezeigte Grundaufbau ist die erste Teiloptik 5 in der Eintrittspupille 9 angeordnet, um auf dem Filterelement 6 ein Zwischenbild zu erzeugen. Die erste Teiloptik 5 kann jedoch auch entfallen, wenn die Erzeugung des Zwischenbildes auf dem Filterelement 6 nicht gewünscht ist. Ferner kann der Grundaufbau gemäß Fig. 10 variiert werden durch z.B. zusätzliche Linsen vor und/oder hinter der Eintrittspupille 9 (in diesem Fall kann die erste Teiloptik 5 beispielsweise entfallen), um entweder auf dem Filterelement 6 ein Zwischenbild zu erzeugen, wenn eine ortsaufgelöste und spektral aufgelöste Anordnung angestrebt wird, oder um das Objektfeld zu homogenisieren. Neben der Anordnung der beiden Elemente 30 und 31, wie sie in Fig. 10 gezeigt ist, was zu einem Arm führt, können die beiden Elemente 30 und 31 in zwei unterschiedlichen Armen angeordnet sein, wie dies schematisch in Fig. 12 und 13 dargestellt ist.

Die Verzögerungsstrecke kann für jeden Detektorpixel individuell festgelegt werden. Gleichzeitig muss die Pupillenabbildung des Filterelementes 6 ungestört erhalten bleiben. Sollen nur sehr geringe Differenzen zwischen den Verzögerungslängen benachbarter Pixel realisiert werden, können die beiden reflektierenden Ebenen leicht verkippt angeordnet werden und damit die Verzögerungsstrecke linear über dem Bildfeld variiert werden. Sollen aber stärkere Gradienten der Verzögerungsstrecke realisiert werden, so muss mindestens eines der beiden reflektierenden Elemente gestuft realisiert werden, um gleichzeitig die Pupillenabbildungsqualität nicht zu verschlechtern. Lokal für einen Pixel haben die beiden Flächen eine sphärisch gekrümmte Form mit einem Krümmungsmittelpunkt in der Mitte der Pupille. Wenn beide reflektierenden Flächen gestuft realisiert werden, kann die makroskopische Wölbung des Filterelementes besser an die Bildfeldwölbung der nachfolgenden Optik angepasst werden.

Bei dem dargestellten Spektrometer in Fig. 10 sieht jeder Kamerapixel eine näherungsweise Zweistrahlinterferenz mit einer spezifischen Verzögerungsstrecke. Um ein spektral aufgelöstes Bild der Umgebung aufzuzeichnen, muss das Spektrometer in der zweiten Richtung über die Objekte gescannt werden, um die Ortsauflösung (und diese spektral aufgelöst) auch in der zweiten Richtung zu erreichen. Das kann z.B. durch eine zusätzliche nicht dargestellte mechanische Scaneinrichtung erreicht werden. Bei Luftbildspektrometern kann der Scan durch die Flugbewegung des Spektrometers verwirklicht werden.

Wenn dieses Spektrometer eingesetzt wird, um spektrale Bilder auf größere Messentfernung mit passiver Sonnen-Beleuchtung aufzunehmen, kann am Bildrand über eine weiße Streuscheibe 36 ein Sonnenreferenzspektrum simultan aufgezeichnet werden (siehe Fig. 11).

Die Rückstreucharakteristik des in Fig. 10 und 11 gezeigten Filterelementes 6 entspricht nicht exakt einer Zweistrahlinterferenz, sondern eher einer Mehrstahlinterferenz eines Fabry-Perot-Interferometers mit sehr geringem Gütefaktor. Diese Charakteristik kann aber bei der Auswertung berücksichtigt und kompensiert werden. Das vordere Element 30 (z.B. eine Meniskuslinse 30), das auf der Rückseite teilverspiegelt ist, hat auch einen vorderseitigen Reflex, der die spektrale Gesamtcharakteristik beeinflusst. Ist die Meniskuslinse 30 aber deutlich dicker als die maximale Spaltbreite zu dem zweiten Stufenelement 31 (bzw. zum Stufenspiegel 31, so können die dadurch verursachten sehr schnellen spektralen Modulationen nicht aufgelöst werden und daher durch Offsetsubtraktion korrigiert werden.

Alternativ kann auch eine Variante des Aufbaus wie in Fig. 12 gezeigt ist, verwendet werden. Bei dieser Variante wird die Strahlteilerplatte 32, die eine Intensitätsteilung oder eine Polarisationsteilung durchführen kann, so genutzt, dass zwei aufgeteilte Interferometerarme 25, 26 erzeugt sind. Im ersten Interferometerarm 25 ist statt der Meniskuslinse 30 ein sphärischer Spiegel 27 angeordnet. Im zweiten Interferometerarm 26 ist der Stufenspiegel 31 (schematisch dargestellt) vorgesehen. Auch hier bilden der sphärische Spiegel 27 und der Stufenspiegel 31 das Filterelement 6. Natürlich können die Arme 25, 26 auch vertauscht angeordnet sein. Ferner ist es möglich, beide Elemente 27 und 31 jeweils als Stufenspiegel auszubilden.

Der Stufenspiegel bzw. das Stufenelement 31 weist bevorzugt eine vollständige Frontseitenverspiegelung auf, so dass es aus beliebigen Materialien wie Metallen, Kunststoff oder Glas gefertigt sein kann. Gleiches gilt für den sphärischen Spiegel 27.

Für die Realisierung einer Polarisationsteilung benötigt man einen polarisierenden Strahlteiler und ein optisches Retarder-Plättchen mit einer Verzögerung von $\lambda/4$. Für die Realisierung eines sehr breitbandigen Spektrometers bis zu Wellenlängen im mittleren Infrarot von bis zu 16 $\mu$m ist es möglich, breitbandbandig polarisierende Beschichtungen mit wire grid-Beschichtungen zu verwenden, wie sie im Stand der Technik bekannt sind. Es gibt aber oberhalb von 2 $\mu$m Wellenlänge keine breitbandigen Retarderplättchen, sodass speziell für die Spektrometeranordnungen eine Intensitätsteilung bevorzugt ist. Eine solche Intensitätsteilung mit auseinandergespiegelten Armen wie sie in Fig. 12 dargestellt ist, hat dann den Vorteil doppelter Effizienz und einer leichter auswertbaren ungestörten Zweistrahlinterferenz.

Da als Filterelement 6 kein Volumenhologrammpolymer mit einer eingeschränkten IR-Transmission verwendet wird, sondern nur ein optisch wirksamer Luftspalt, kann bei geeigneter Wahl der optischen Materialien der restlichen Komponenten der nutzbare Spektralbereich von dem UV-Bereich (Ultraviolett-Bereich) bis MIR (mittleres Infrarot) ausgedehnt werden.

Das Grundprinzip, dass man eine hohe spektrale Auflösung mit einer gleichzeitigen sehr empfindlichen Kameraoptik mit großer Blendenzahl von kleiner als 1,5 realisieren kann und einem sehr empfindlichen Spektrometerprinzip wie FTIR, das mit jedem Sensorelement etwa die Hälfte der gesamten einfallenden spektralen Helligkeit registrieren kann, ermöglicht auch Sensorelemente mit geringerer Sensitivität. Es können beispielsweise Mikrobolometer als Detektor eingesetzt werden und damit ein Spektralbereich von 600 nm bis etwa 16 $\mu$m genutzt werden, wenn die transmitiven optischen Elemente entsprechende Transmission (z.B. aus Zinkselenit gefertigt) aufweisen.

Soll ein low cost IR-Spektrometer ohne Ortsauflösung realisiert werden, das mit einem Bild ein Spektrum aufnimmt, so ist der Aufbau gemäß Fig. 13 bevorzugt. Der Aufbau gemäß Fig. 13 ist optimiert für die Verwendung von zweidimensional ortsauflösenden Sensoren mit begrenzter Pixelauflösung. Das aus der Umgebung einfallende Licht kann mindestens über das Winkelspektrum über eine sozusagen gekühlte Beleuchtung mittels einer Linse 5 (hier vor der Eintrittspupille 9 im Objektraum), die quasi als sogenannte "Köhlerlinse" wirkt, wie in Fig. 13 gezeigt ist, homogenisiert werden. Es ist auch jede andere Art der Homogenisierung mittels einer Optik, wie z.B. mittels eines nicht dargestellten Doppellinsenarrays (z.B. in Feld und Apertur) möglich. Diese Arten der Homogenisierung sind dem Fachmann bekannt.

Der schematisch dargestellte Stufenspiegel 31 ist in der Richtung von oben nach unten in der Darstellung stufig und in der Richtung senkrecht zur Zeichenebene verkippt, so dass sich in dieser Richtung ein keilförmiger Luftspalt ergibt. Die Keiligkeit wird bevorzugt so eingestellt, dass die Spaltbreite am Bildfeldrand etwa der Stufenhöhe in der zweiten Richtung entspricht, so dass die Weglängendifferenz zweidimensional über den Detektor 4 verteilt ist.

Bei den bisher beschriebenen optischen Systemen ist das Filterlement 6 stets ein reflektives Filterelement 6.

**Patentansprüche**

1.  Optisches System mit

    einer Eintrittspupille (9), die einen ersten Öffnungsdurchmesser (D1) aufweist,
    einer Austrittspupille (10) und
    einem von der Eintrittspupille (9) beabstandeten Filterelement (6), das so ausgebildet und angeordnet ist, dass auf dem Filterelement (6) von einem durch die Eintrittspupille (9) laufenden und sich von dieser divergent ausbreitenden Strahlenbündel ein zweiter Durchmesser (D2) ausgeleuchtet ist,
    wobei der zweite Durchmesser (D2) dem n-fachen des ersten Öffnungsdurchmessers (D1) entspricht und n eine Zahl größer als 1 ist, wodurch das lokale Winkelspektrum an jedem Punkt des Filterelements (6) um das n-fache kleiner ist im Vergleich zur Eintrittspupille (9), und wobei eine das Filterelement (6) aufweisende Abbildungsoptik (3) vorgesehen ist, die die Eintrittspupille (9) auf die Austrittspupille (10) abbildet,
    **dadurch gekennzeichnet, dass**
    das Filterelement (6) als reflektives Filterelement ausgebildet ist und an jedem Punkt selektiv nur einen vorbestimmten Spektralbereich zur Austrittspupille (10) reflektiert.

2.  Optisches System nach Anspruch 1, bei dem das Filterelement (6) in der Richtung von der Eintrittspupille (9) zum Filterelement (6) hin strukturiert ausgebildet ist.

3.  Optisches System nach Anspruch 2, bei dem das Filterelement (6) in der Richtung von der Eintrittspupille (9) zum Filterelement (6) hin hintereinander angeordnete Filterschichten, die jeweils gekrümmt sind, aufweist.

4.  Optisches System nach Anspruch 3, bei dem die Filterschichten sphärisch gekrümmt sind und ihre Krümmungsmittelpunkte jeweils näher an der Eintrittspupille (9) als am Filterelement (6) liegen.

5.  Optisches System nach Anspruch 4, bei dem die Krümmungsmittelpunkte der Filterschichten zusammenfallen und in der Eintrittspupille (9) liegen.

6.  Optisches System nach einem der obigen Ansprüche, bei dem die Abbildungsoptik mit Ausnahme von eventuell vorgesehenen Umlenkspiegeln nur das Filterelement (6) aufweist.

7.  Optisches System nach einem der obigen Ansprüche, bei dem Eintritts- und Austrittspupille (9, 10) mindestens teilweise überlappen.

8.  Optisches System nach Anspruch 7, bei dem die mindestens teilweise Überlappung mittels eines Intensitäts- und/oder Polarisationsteilers (32) realisiert ist.

9.  Optisches System nach Anspruch 8, bei dem der Intensitäts- und/oder Polarisationsteiler (32) so angeordnet ist, dass weder die Eintrittspupille (9) noch die Austrittspupille (10) durch den Intensitäts- und/oder Polarisationsteiler (32) verläuft.

10. Optisches System nach einem der obigen Ansprüche, bei dem das Filterelement (6) ein Volumengitter, einen dichroitischen Schichtstapel und/oder reflektierende Schichten mit transparenter Abstandsschicht umfasst.

11. Optisches System nach einem der obigen Ansprüche, bei dem das reflektive bzw. transmissive Filterelement (6) ein Volumenhologramm mit mehreren sphärisch gekrümmten Braggebenen umfasst.

12. Optisches System nach einem der obigen Ansprüche, bei dem zwischen Eintritts- und Austrittspupille (9, 10) mindestens ein Spiegelelement (7) zur Strahlengangfaltung angeordnet ist.

13. Optisches System nach einem der obigen Ansprüche, bei dem die Abbildungsoptik (3) mindestens ein zusätzliches optisches Element (16) vor dem Filterelement (6) aufweist, um ein reelles Zwischenbild eines Objektes vor oder auf dem Filterelement (6) zu erzeugen.

14. Optisches System nach einem der obigen Ansprüche, bei dem mindestens ein zusätzliches optisches Element vor dem Filterelement (6) angeordnet ist, um eine vollständige oder teilweise Homogenisierung in Feld und/oder Apertur zu bewirken.

15. Optisches System nach einem der obigen Ansprüche, das als Kamera ausgebildet ist, wobei die Kamera bevorzugt als hyperspektrale Kamera ausgebildet ist.

**Claims**

1.  Optical system, having

an entrance pupil (9) with a first opening diameter (D1), an exit pupil (10) and

a filter element (6) which is spaced apart from the entrance pupil (9) and which is designed and arranged such that a second diameter (D2) is illuminated on the filter element (6) by a beam which passes through the entrance pupil (9) and propagates divergently from the latter,

wherein the second diameter (D2) corresponds to n-times the first opening diameter (D1), where n is a number greater than 1,

as a result of which the local angle spectrum at each point of the filter element (6) is n-times smaller in comparison with the entrance pupil (9),

and wherein an imaging optical unit (3) which comprises the filter element (6) and which images the entrance pupil (9) onto the exit pupil (10) is provided, **characterized in that**

the filter element (6) is designed as a reflective filter element and at each point selectively reflects only a predetermined spectral range to the exit pupil (10).

2. Optical system according to Claim 1, wherein the filter element (6) has a structured embodiment in the direction from the entrance pupil (9) to the filter element (6).

3. Optical system according to Claim 2, wherein the filter element (6) comprises successively arranged and in each case curved filter layers in the direction from the entrance pupil (9) to the filter element (6).

4. Optical system according to Claim 3, wherein the filter layers are spherically curved, and their centres of curvature are located closer to the entrance pupil (9) than to the filter element (6) in each case.

5. Optical system according to Claim 4, wherein the centres of curvature of the filter layers coincide and are located in the entrance pupil (9).

6. Optical system according to any of the preceding claims, wherein
the imaging optical unit only comprises the filter element (6) apart from possibly provided deflection mirrors.

7. Optical system according to any of the preceding claims, wherein
the entrance and the exit pupil (9, 10) at least partly overlap.

8. Optical system according to Claim 7, wherein the at least partial overlap is realized by means of an intensity and/or polarization splitter (32).

9. Optical system according to Claim 8, wherein the intensity and/or polarization splitter (32) is arranged such that neither the entrance pupil (9) nor the exit pupil (10) extends through the intensity and/or polarization splitter (32).

10. Optical system according to any of the preceding claims, wherein
the filter element (6) comprises a volume grating, a dichroic layer stack and/or reflecting layers with a transparent spacer layer.

11. Optical system according to any of the preceding claims, wherein
the reflective or transmissive a filter element (6) comprises a volume hologram with a plurality of spherically curved Bragg planes.

12. Optical system according to any of the preceding claims, wherein
at least one mirror element (7) for folding the beam path is arranged between the entrance and the exit pupil (9, 10) .

13. Optical system according to any of the preceding claims, wherein the imaging optical unit (3) comprises at least one additional optical element (16) upstream of the filter element (6) for generating a real intermediate image of an object upstream or on the filter element (6).

14. Optical system according to any of the preceding claims, wherein at least one additional optical element is arranged upstream of the filter element (6) in order to bring about a complete or partial homogenization in terms of field and/or aperture.

15. Optical system according to any of the preceding claims, designed as a camera, wherein the camera is preferably designed as a hyperspectral camera.

**Revendications**

1. Système optique avec

une pupille d'entrée (9), qui présente un premier diamètre d'ouverture (D1),
une pupille de sortie (10) et
un élément de filtrage (6) tenu à distance de la pupille d'entrée (9), qui est réalisé et est disposé de telle sorte qu'un faisceau de rayons passant à travers la pupille d'entrée (9) et se propageant de manière divergente par rapport à celle-ci éclaire un deuxième diamètre (D2) sur l'élément de filtrage (6),

le deuxième diamètre (D2) correspondant à n fois le premier diamètre d'ouverture (D1) et n étant un nombre supérieur à 1,

ce qui permet que le spectre angulaire local sur chaque point de l'élément de filtrage (6) est inférieur du multiple n en comparaison avec la pupille d'entrée (9), et une optique de représentation (3) comportant l'élément de filtrage (6) étant prévue, laquelle représente la pupille d'entrée (9) et la pupille de sortie (10), **caractérisé en ce que**

l'élément de filtrage (6) est réalisé comme un élément de filtrage de réflexion et réfléchit, sur chaque point, au choix seulement une plage spectrale prédéfinie vers la pupille de sortie (10).

2. Système optique selon la revendication 1, où l'élément de filtrage (6) est réalisé de manière structurée dans la direction de la pupille d'entrée (9) vers l'élément de filtrage (6).

3. Système optique selon la revendication 2, où l'élément de filtrage (6) comporte des couches de filtrage disposées les unes derrière les autres dans la direction de la pupille d'entrée (9) vers l'élément de filtrage (6), lesquelles sont respectivement courbées.

4. Système optique selon la revendication 3, où les couches de filtrage sont courbées de manière sphérique et leurs centres de courbure se situent respectivement davantage à proximité de la pupille d'entrée (9) que de l'élément filtrant (6).

5. Système optique selon la revendication 4, où les centres de courbure des couches de filtrage coïncident et se trouvent dans la pupille d'entrée (9).

6. Système optique selon l'une des revendications précédentes, où l'optique de représentation comporte, à l'exception de miroirs de déviation éventuellement prévus, seulement l'élément de filtrage (6).

7. Système optique selon l'une des revendications précédentes, où la pupille d'entrée et la pupille de sortie (9, 10) se chevauchent au moins en partie.

8. Système optique selon la revendication 7, où l'au moins un chevauchement partiel est réalisé au moyen d'un diviseur d'intensité et/ou de polarisation (32).

9. Système optique selon la revendication 8, où le diviseur d'intensité et/ou de polarisation (32) est disposé de telle sorte que ni la pupille d'entrée (9) ni la pupille de sortie (10) ne s'étend à travers le diviseur d'intensité et/ou de polarisation (32).

10. Système optique selon l'une des revendications précédentes, où l'élément de filtrage (6) comprend un réseau volumique, un empilement de couches dichroïque et/ou des couches réfléchissantes avec une couche d'espacement transparente.

11. Système optique selon l'une des revendications précédentes, où l'élément de filtrage (6) de réflexion ou de transmission comprend un hologramme volumique avec plusieurs plans de Bragg courbés de manière sphérique.

12. Système optique selon l'une des revendications précédentes, où au moins un élément de miroir (7) de repliement de trajet optique est disposé entre la pupille d'entrée et la pupille de sortie (9, 10).

13. Système optique selon l'une des revendications précédentes, où l'optique de représentation (3) comporte au moins un élément optique supplémentaire (16) devant l'élément de filtrage (6) pour produire une image intermédiaire réelle d'un objet devant ou sur l'élément de filtrage (6).

14. Système optique selon l'une des revendications précédentes, où au moins un élément optique supplémentaire est disposé devant l'élément de filtrage (6) pour entraîner une homogénéisation totale ou partielle en termes de champ et/ou d'ouverture.

15. Système optique selon l'une des revendications précédentes, qui est réalisé comme une caméra, la caméra étant réalisée de manière préférée comme une caméra hyperspectrale.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**EP 3 987 327 B1**

**IN DER BESCHREIBUNG AUFGEFÜHRTE DOKUMENTE**

**In der Beschreibung aufgeführte Patentdokumente**

- US 4184749 A
- WO 2008140787 A2